# EUROPÄISCHE PATENTANMELDUNG

(11) **EP 1 122 412 A2**
(43) Veröffentlichungstag der Anmeldung: **08.08.2001**
(21) Anmeldenummer: 01102596.2
(22) Anmeldetag: 06.02.2001
(51) Int. Cl.: F02B 67/00, F02B 43/00

(54) **Arbeitsmaschine mit einer durch eine Gasanlage gespeisten Brennkraftmaschine**

(30) Priorität: 07.02.2000 DE 10005316
(71) Anmelder: STILL GMBH, D-22113 Hamburg (DE)
(72) Erfinder: Mey, Jörn, Dipl.-Ing., 23883 Hollenbek (DE)
(74) Vertreter: Kasseckert, Rainer

(57) **Zusammenfassung**

Eine Arbeitsmaschine weist eine elektrischen Anlage und eine durch eine Gasanlage (2) gespeiste Brennkraftmaschine (1) auf. Um die Sicherheit der Arbeitsmaschine zu erhöhen steht ein manuell und/oder automatisch betätigbarer Not-Aus-Schalter (6) in Wirkverbindung mit der elektrischen Anlage, die durch den Not-Aus-Schalter (6) stromlos schaltbar ist. Der Not-Aus-Schalter (6) kann zusätzlich oder alternativ in Wirkverbindung mit einem ein feuerhemmendes Medium enthaltenden Speicher stehen, der durch den Not-Aus-Schalter (6) in Öffnungsstellung schaltbar ist, wobei feuerhemmendes Medium in die Bereiche der Gasanlage (2) eingebracht wird. Der Not-Aus-Schalter (6) kann mit einem Gasdetektor in Wirkverbindung stehen. Er ist zur manuellen Betätigung derart im Bereich des Fahrerarbeitsplatzes angeordnet ist, daß er sowohl von einer aufgesessenen Bedienperson als auch von einer abgesessenen, die Arbeitsmaschine wartenden Bedienperson betätigt werden kann. Die Arbeitsmaschine ist bevorzugt als Treibgasstapler ausgebildet.

## Beschreibung

Die Erfindung betrifft eine Arbeitsmaschine mit einer elektrischen Anlage und mit einer durch eine Gasanlage gespeisten Brennkraftmaschine.

Derartige Arbeitsmaschinen kommen beispielsweise als treibgasbetriebene Gabelstapler zum Einsatz. Möglich ist auch ein Betrieb mit Erdgas oder Wasserstoff. Bei sachgemäßer Handhabung und Wartung stellen solche Arbeitsmaschinen kein größeres Gefährdungspotential dar, als Arbeitsmaschinen mit herkömmlichen Brennkraftmaschinen, d. h. mit Brennkraftmaschinen, die mit Benzin- oder Dieselkraftstoff betrieben werden. Sofern die Betriebs- und Wartungsanleitungen Beachtung finden, werden die geltenden Sicherheitsvorschriften erfüllt.

Bei Fehlbedienung, mangelnder Wartung oder Bauteileausfall, geht jedoch ein stark erhöhtes Gefährdungspotential von gattungsgemäßen Arbeitsmaschinen aus. Hierbei ist besonders die Brandgefahr bei Gasaustritt und gleichzeitig auftretendem elektrischen Funkenflug hervorzuheben.

Der vorliegenden Erfindung liegt daher die Aufgabe zu Grunde, einen gattungsgemäße Arbeitsmaschine mit erhöhter Sicherheit zur Verfügung zu stellen.

Diese Aufgabe wird erfindungsgemäß dadurch gelöst, daß ein manuell und/oder automatisch betätigbarer Not-Aus-Schalter in Wirkverbindung mit der elektrischen Anlage und/oder in Wirkverbindung mit einem ein feuerhemmendes Medium enthaltenden Speicher steht, wobei die elektrische Anlage durch den Not-Aus-Schalter stromlos schaltbar ist und wobei der Speicher durch den Not-Aus-Schalter in Öffnungsstellung schaltbar und feuerhemmendes Medium in die Bereiche der Gasanlage einbringbar ist.

Der erfindungswesentliche Gedanke besteht demnach darin, im Gefahrenfall, der von der Bedienperson und/oder automatisch erkannt wird (beispielsweise am Austreten von Gas), die elektrische Anlage lahmzulegen, um einerseits in der Gasanlage vorhandene elektrische Ventile zwecks Verhinderung von weiterem Gaseaustritt aus der Gasananlage in Schließposition zu bringen und um andererseits die Gefahr eines Funkenflugs zu verhindern. Alternativ oder zusätzlich dazu kann die Gasanlage mit einem feuerhemmenden Material besprüht oder geflutet werden, um Luftsauerstoff zu verdrängen oder das Gas zu binden.

Durch die erfindungsgemäße Ausbildung der Arbeitsmaschine kann das Risiko von Unfällen mit Brandeinwirkung an Bedienperson und Arbeitsmaschine reduziert werden.

Für den Fall, daß ein automatisches Wirksamwerden des Not-Aus-Schalters erzielt werden soll, steht gemäß einer vorteilhaften Weiterbildung der Erfindung der Not-Aus-Schalter mit einem Gasdetektor in Wirkverbindung. Sobald der Gasdetektor erkennt, daß sich Gas in der Umgebung befindet, gibt er ein Signal ab, mit dessen Hilfe der Not-Aus-Schalter aktiviert wird.

Soll hingegen der Not-Aus-Schalter zusätzlich oder ausschließlich manuell betätigbar sein, so sieht eine andere günstige Ausgestaltung der Erfindung vor, daß der Not-Aus-Schalter derart im Bereich des Fahrerarbeitsplatzes angeordnet ist, daß der Not-Aus-Schalter sowohl von einer aufgesessenen Bedienperson als auch von einer abgesessenen, die Arbeitsmaschine wartenden Bedienperson betätigbar ist.

Es versteht sich von selbst, daß die Erfindung prinzipiell in allen Arbeitsmaschinen Verwendung finden kann, die mit gasgespeisten Brennkraftmaschinen angetrieben werden, beispielsweise durch Treibgas oder Erdgas. Ein bevorzugter Einsatzbereich der erfindungsgemäßen Arbeitsmaschine ist ihre Verwendung als Treibgasstapler.

Weitere Vorteile und Einzelheiten der Erfindung werden anhand des in der schematischen Figur dargestellten Ausführungsbeispiels näher erläutert.

Eine Arbeitsmaschine weist eine elektrische Anlage auf, an die eine Brennkraftmaschine 1, eine Gasanlage 2 und eine Fahrzeugelektrik 3 angeschlossen sind, die auch eine aufladbare Batterie enthält. Die Brennkraftmaschine 1 treibt einen Generator 4 an und ist durch einen Anlasser 5 in Betrieb setzbar. Die genannten Baugruppen der elektrischen Anlage sind in einem Stromkreis angeordnet, in dem sich ein Not-Aus-Schalter 6 befindet.

Mit Hilfe des Not-Aus-Schalters 6, der manuell und/oder automatisch betätigbar ist, kann die elektrische Anlage im Gefahrenfall stromlos geschaltet werden. Dieser Gefahrenfall kann von einer Bedienperson und/oder automatisch erkannt werden, beispielsweise am Austreten von Gas.

Um den Not-Aus-Schalters 6 automatisch zu betätigen, steht er mit einem Gasdetektor in Wirkverbindung. Sobald der Gasdetektor erkennt, daß sich Gas in der Umgebung befindet, gibt er ein Signal ab, mit dessen Hilfe der Not-Aus-Schalter 6 betätigt wird.

Soll der Not-Aus-Schalter 6 zusätzlich oder alternativ von Hand betätigbar sein, empfiehlt es sich, den Not-Aus-Schalter 6 derart im Bereich des Fahrerarbeitsplatzes anzuordnen, daß er sowohl von einer aufgesessenen Bedienperson als auch von einer abgesessenen, die Arbeitsmaschine wartenden Bedienperson betätigbar ist.

Wird der Not-Aus-Schalter 6 betätigt und dadurch die elektrische Anlage stromlos geschaltet, so werden in der Gasanlage 2 vorhandene elektrische Ventile zwecks Verhinderung von weiterem Gaseaustritt aus der Gasananlage 2 in Schließposition gebracht. Sollte die Brennkraftmaschine 1 vor der Auslösung des Not-Aus-Schalters 6 in Betrieb gewesen sein, so wirs sie durch Abschalten der Zündung (und durch fehlendes Gas) stillgestzt. Die Stromlosigkeit der elektrischen Anlage verhindert die Gefahr eines Funkenflugs.

Alternativ oder zusätzlich kann durch Betätigen des Not-Aus-Schalters 6 ein Speicher, der ein feuerhemmendes Medium enthält, in Öffnungsstellung geschaltet und dadurch die Gasanlage 2 mit einem feuerhemmenden Material besprüht oder geflutet werden, um Luftsauerstoff zu verdrängen oder das Gas zu binden.

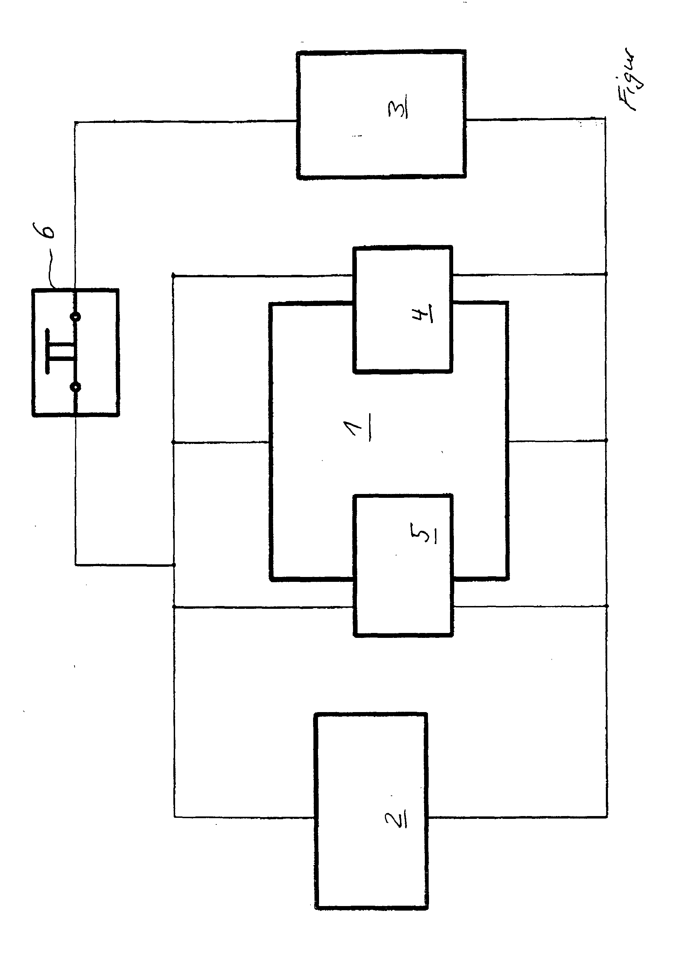

## Patentansprüche

1. Arbeitsmaschine mit einer elektrischen Anlage und mit einer durch eine Gasanlage gespeisten Brennkraftmaschine, **dadurch gekennzeichnet,** daß ein manuell und/oder automatisch betätigbarer Not-Aus-Schalter (6) in Wirkverbindung mit der elektrischen Anlage und/oder in Wirkverbindung mit einem ein feuerhemmendes Medium enthaltenden Speicher steht, wobei die elektrische Anlage durch den Not-Aus-Schalter (6) stromlos schaltbar ist und wobei der Speicher durch den Not-Aus-Schalter in Öffnungsstellung schaltbar und feuerhemmendes Medium in die Bereiche der Gasanlage (2) einbringbar ist.

2. Arbeitsmaschine nach Anspruch 1, **dadurch gekennzeichnet,** daß der Not-Aus-Schalter (6) mit einem Gasdetektor in Wirkverbindung steht.

3. Arbeitsmaschine nach Anspruch 1 oder 2, wobei ein Fahrerarbeitsplatz vorgesehen ist, **dadurch gekennzeichnet**, daß der Not-Aus-Schalter (6) derart im Bereich des Fahrerarbeitsplatzes angeordnet ist, daß der Not-Aus-Schalter (6) sowohl von einer aufgesessenen Bedienperson als auch von einer abgesessenen, die Arbeitsmaschine wartenden Bedienperson betätigbar ist.

4. Arbeitsmaschine nach einem der Ansprüche 1 bis 3, **gekennzeichnet durch** die Ausbildung als Treibgasstapler.
